Europäisches Patentamt

European Patent Office

Office européen des brevets

(11) **EP 0 492 392 B1**

(19)

(12) **FASCICULE DE BREVET EUROPEEN**

(45) Date de publication et mention
de la délivrance du brevet:
**27.12.1996 Bulletin 1996/52**

(51) Int Cl.6: **G01N 27/90**

(21) Numéro de dépôt: **91121691.9**

(22) Date de dépôt: **18.12.1991**

(54) **Dispositif de contrôle non destructif à courants de Foucault**

Gerät zur zerstörungsfreien Prüfung mit Wirbelströmen

Apparatus for non-destructive testing with Eddy-currents

(84) Etats contractants désignés:
**DE FR GB IT NL**

(30) Priorité: **28.12.1990 FR 9016470**

(43) Date de publication de la demande:
**01.07.1992 Bulletin 1992/27**

(73) Titulaire: **COMPAGNIE GENERALE
D'AUTOMATISME CGA-HBS
F-91220 Bretigny sur Orge (FR)**

(72) Inventeur: **Tasca, Jean-Pierre
F-91700 Sainte Genevieve Des Bois (FR)**

(74) Mandataire: **Weinmiller, Jürgen et al
Lennéstrasse 9
Postfach 24
82336 Feldafing (DE)**

(56) Documents cités:
**EP-A- 0 033 802**          **US-A- 3 443 212**

- **SOVIET PATENTS ABSTRACTS Week 8949,
  Derwent Publications Ltd., London, GB; AN
  89-363176**
- **SOVIET PATENTS ABSTRACTS Week 8506,
  Derwent Publications Ltd., London, GB; AN
  85-036559**
- **PATENT ABSTRACTS OF JAPAN vol. 9, no. 127
  (P-360)(1850) 31 Mai 1985 & JP-A-60 011 158**

## Description

L'invention concerne un dispositif de contrôle non destructif à courants de Foucault. Un tel dispositif permet, par exemple, de détecter des failles, ou des inclusions de matériaux étrangers, ou des variations de composition, dans une pièce métallique. Il met en oeuvre un procédé consistant à engendrer des courants de Foucault en un point de la pièce à contrôler, en soumettant ce point à un champ magnétique alternatif, et à détecter une variation de ces courants de Foucault, par rapport à une référence, en détectant une variation d'impédance dans au moins une bobine utilisée pour engendrer ces courants de Foucault.

Un premier procédé connu consiste à : engendrer des courants de Foucault au moyen d'une bobine unique parcourue par un courant alternatif; à mesurer l'impédance de cette bobine; et à la comparer à une valeur d'impédance de référence déterminée avec une pièce considérée comme bonne. Ce procédé a pour inconvénients de nécessiter la détermination préalable d'une impédance de référence, et de fournir un résultat qui dépend de la température de la pièce et de la bobine.

Un second procédé connu est un procédé différentiel remédiant à ces inconvénients. Il consiste à : engendrer des courants de Foucault en deux points voisins d'une même pièce, au moyen de deux bobines identiques parcourues par la même intensité, soit en phase, soit en opposition de phase; et à mesurer la différence des impédances de ces deux bobines. Cette différence est nulle lorsque les deux points de la pièce à contrôler ont la même composition, même si la température varie, et sans étalonnage préalable. La différence d'impédance est non nulle si la composition de la pièce n'est pas identique aux deux points où sont situées les bobines.

Ces procédés de contrôle non destructif permettent un contrôle à une profondeur inférieure ou égale à un 1cm. Elle est fonction de la fréquence du courant alternatif parcourant la ou les bobines. Cette fréquence est couramment comprise entre 10Hz et 5MHz. Pour discriminer des nuances de composition d'un matériau, il est connu de réaliser plusieurs mesures d'impédance, ou de différences d'impédances, à différentes fréquences. Chaque jeu de valeurs ainsi déterminé constitue une signature de la nuance de composition. Une pièce est considérée comme bonne ou mauvaise en comparant sa signature par rapport à une signature de référence.

Un dispositif classique de contrôle non destructif à courants de Foucault comporte :

- un générateur à pont de Wien fournissant un signal sinusoïdal;
- un amplificateur de puissance recevant ce signal sinusoïdal et l'amplifiant linéairement pour fournir un signal d'excitation de puissance;
- deux bobines reliées par des câbles à la sortie de l'amplificateur de puissance pour être alimentées par le signal d'excitation de puissance, en phase ou en opposition de phase, selon le sens de branchement des bobines, et qui sont couplées électromagnétiquement à une pièce à contrôler;
- des moyens de mesure pour détecter une variation de l'impédance d'une bobine;
- des moyens de traitement numérique permettant notamment de mémoriser les résultats des contrôles.

Le courant d'excitation parcourant les bobines est sinusoïdal, parce que l'impédance d'une bobine est une grandeur qui n'est définie que pour une fréquence donnée et parce qu'une impédance est mesurée classiquement en la soumettant à un courant sinusoïdal. En outre, un courant sinusoïdal présente l'avantage de ne pas être déformé par sa propagation dans un câble de grande longueur. En effet, il est nécessaire, dans certaines applications, de relier les bobines au dispositif de contrôle par des câbles de grande longueur, jusqu'à deux cent mètres. Il est bien connu qu'une ligne de grande longueur a un effet dispersif sur les différentes fréquences constituant un signal se propageant dans cette ligne. Un signal non sinusoïdal est donc déformé, et d'une manière qui est fonction des caractéristiques de la ligne. Cette distorsion des signaux non sinusoïdaux compromet la précision des mesures d'impédance ou de différence d'impédances lorsque le procédé de mesure nécessite un signal sinusoïdal à faible distorsion. La solution classique consiste donc à utiliser un générateur de signal sinusoïdal.

Le générateur lui-même doit avoir une très faible distorsion pour ne pas compromettre la précision des mesures. Pour obtenir la meilleure précision des mesures, il doit avoir aussi une excellente stabilité en fréquence, car toute fluctuation de la fréquence dégrade le rapport signal sur bruit de la mesure et donc dégrade la précision. Cette dégradation gêne la détection des petits défauts dans une pièce.

Le générateur utilisé classiquement est un oscillateur à pont de Wien car il a une assez bonne stabilité de fréquence et une faible distorsion, pour fournir un signal de fréquence donnée. Malheureusement un oscillateur à pont de Wien ne présente pas ces qualités lorsqu'on fait varier sa fréquence, ce qui rend difficile la réalisation d'un générateur à fréquence variable et réduit la précision des mesures.

Il est connu de réaliser des moyens de mesure comportant deux détecteurs synchrones. Dans ce cas, la précision des mesures est réduite si la longueur des câbles est grande. En effet, le signal d'excitation met un certain temps à aller jusqu'aux bobines, et le signal de mesure met un temps égal pour aller des bobines jusqu'aux détecteurs synchrones. Des moyens sont associés au pont de Wien pour fournir, aux deux détecteurs synchrones respectivement, deux signaux de référence, sinusoïdaux, de même fréquence que le signal d'excitation, et en quadrature. Ces moyens sont situés classiquement à proximité des détecteurs synchrones, par conséquent les signaux de référence ont une avance de phase par rapport au signal de mesure, et les détecteurs synchrones travaillent dans des conditions non optimales. Cette avance de phase est fonction de la longueur des câbles, par conséquent elle varie en fonction des circonstances de l'utilisation du dispositif de contrôle, et elle est difficile à compenser puisqu'elle est variable et qu'il faut agir sur un signal analogique.

Le but de l'invention est de proposer un dispositif de contrôle non destructif à courants de Foucault, permettant de faire varier la fréquence sur une large plage en obtenant une précision des mesures, au moins aussi grande que celle obtenue avec un oscillateur à pont de Wien, à fréquence fixe; et permettant d'éviter une réduction de la précision lors de l'utilisation de câbles de grandes longueurs.

L'objet de l'invention est un dispositif de contrôle non destructif à courants de Foucault comportant :

- des moyens pour fournir un signal périodique d'excitation de puissance;
- au moins une bobine reliée par un câble à une sortie des moyens pour fournir le signal d'excitation de puissance, et couplée électromagnétiquement à une pièce à contrôler;
- des moyens de mesure pour détecter une variation de l'impédance d'une bobine;

caractérisé en ce que les moyens pour fournir un signal périodique d'excitation de puissance comportent :

- un oscillateur stabilisé par un quartz, fournissant un signal impulsionnel constituant un signal d'horloge, à fréquence constante;
- au moins un diviseur de fréquence programmable pour fournir un signal périodique ayant une fréquence variable sous-multiple de celle du signal de d'horloge.

Le dispositif ainsi caractérisé permet d'obtenir une fréquence variable sur une très grande plage avec une très grande stabilité et une bonne résolution, car la stabilité d'un oscillateur à quartz est excellente et la résolution est fixée par la fréquence de l'oscillateur à quartz et par le nombre d'étages que l'on donne au diviseur de fréquences. En augmentant la fréquence de l'oscillateur à quartz et ce nombre d'étages, l'intervalle entre deux valeurs consécutives de la fréquence peut être aussi fin que l'on souhaite. La stabilité d'un oscillateur à quarts classique, sans précautions particulières, est largement suffisante pour éviter toute perte de précision des mesures causée par l'instabilité de fréquence.

Le dispositif ainsi caractérisé présente aussi l'avantage d'être facilement commandable par un dispositif de traitement numérique, puisqu'un diviseur de fréquence programmable peut être commandé par un mot binaire définissant le rapport de division de fréquence.

Selon une autre caractéristique, le dispositif de contrôle selon l'invention est caractérisé en ce que le signal d'excitation de puissance est un signal impulsionnel périodique, de rapport cyclique $\frac{1}{2}$, appelé communément signal carré; et en ce que les moyens de mesure comportent des moyens pour filtrer la fréquence fondamentale du signal périodique d'excitation de puissance.

Le dispositif ainsi caractérisé présente l'avantage de simplifier la réalisation d'un dispositif de contrôle comportant un oscillateur stabilisé par un quartz, puisqu'il n'y a pas à convertir un signal impulsionnel en un signal sinusoïdal à faible distorsion.

Selon une autre caractéristique, un dispositif de contrôle dans lequel les moyens de mesure comportent au moins un détecteur synchrone, et dans lequel les moyens pour fournir un signal périodique d'excitation de puissance comportent des moyens pour fournir à chaque détecteur synchrone un signal de référence, est caractérisé en ce que, pour compenser l'effet de la longueur du câble, les moyens pour fournir un signal de référence comportent :

- des moyens pour mesurer le temps de propagation d'un signal allant des moyens pour fournir un signal de référence, jusqu'à une bobine, et revenant;
- des moyens pour appliquer à chaque signal de référence un retard égal au temps de propagation ainsi mesuré.

Le dispositif ainsi caractérisé permet d'éloigner la, ou les bobines, du reste du dispositif de contrôle, sans que la longueur des câbles entraîne une dégradation importante de la précision de mesure, qui serait due au retard du signal revenant des bobines, par rapport au signal fourni comme référence aux détecteurs synchrones. Il est particulièrement simple à réaliser, car il est plus facile de déphaser, de manière automatique, un signal impulsionnel fourni par des diviseurs de fréquence, plutôt qu'un signal analogique fourni par un pont de Wien.

L'invention sera mieux comprise et d'autres détails apparaîtront à l'aide de la description d'un exemple de réalisation et des figures l'accompagnant :

- la figure 1 représente le schéma synoptique d'un exemple de réalisation du dispositif de contrôle selon l'invention;
- la figure 2 représente un schéma synoptique plus détaillé du générateur, dans cet exemple de réalisation.

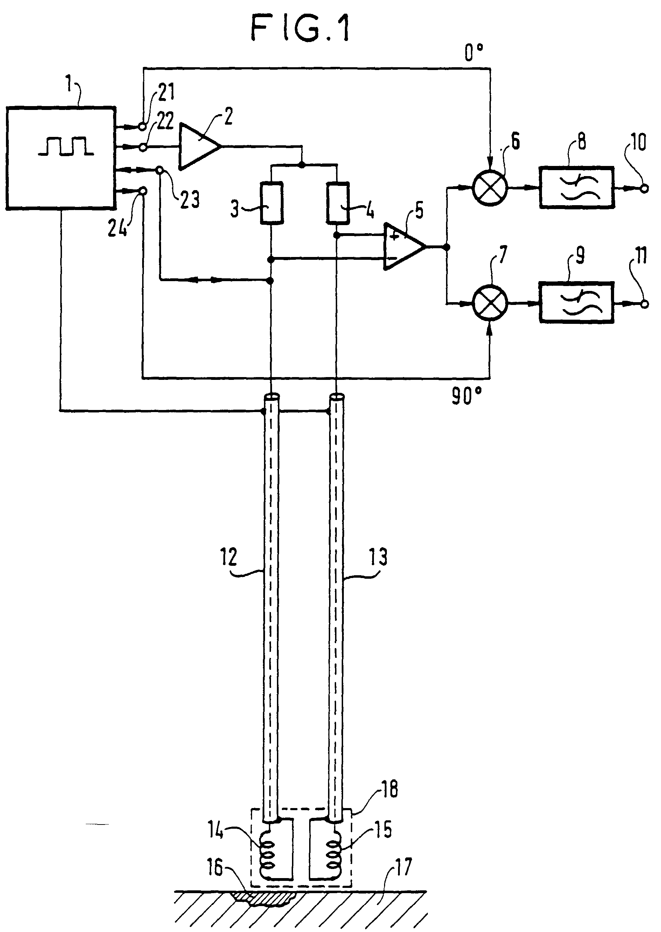

Sur la figure 1, l'exemple réprésenté comporte :

- un générateur de signaux, 1;
- un amplificateur de puissance, 2;
- deux impédances identiques, 3 et 4;
- un amplificateur différentiel 5;
- un premier détecteur synchrone constitué d'un multiplieur analogique 6 et d'un filtre passe-bas 8;
- un second détecteur synchrone constitué d'un multiplieur analogique 7 et d'un filtre passe-bas 9;
- deux bobines identiques, 14 et 15, constituant une sonde 18 éloignée du reste du dispositif de contrôle, et reliées à celui-ci par deux câbles coaxiaux 12 et 13.

La sonde 18 est placée à la surface d'une pièce métallique 17 qui est à contrôler. Elle est généralement déplacée, à une vitesse constante, sur cette surface pour la balayer entièrement. Les bobines 14 et 15 sont couplées électromagnétiquement avec la pièce 17 et sont couplées entre elles, à cause de leur proximité. Les bobines 14 et 15 sont parcourues par deux courants alternatifs, de forme carrée.

Les flux magnétiques des deux bobines 14, 15 s'additionnent ou se soustraient, selon le sens de bobinage des deux bobines et selon le sens du courant d'excitation dans ces bobines. Les deux utilisations sont possibles.

Lorsqu'un défaut 16 est situé en vis-à-vis de la bobine 14 les courants de Foucault créés par la bobine 14 n'ont pas la même configuration que ceux créés par la bobine 15, ce qui se traduit par une différence entre les impédances des bobines 14 et 15.

Le courant d'excitation des bobines 14 et 15 est fourni par la sortie de l'amplificateur de puissance 2, par l'intermédiaire des impédances 3 et 4 qui constituent, avec les bobines 14 et 15, un pont de Wheastone. Une première extrémité de l'impédance 3 et une première extrémité de l'impédance 4 sont reliées à la sortie de l'amplificateur de puissance 2. Une première extrémité de la bobine 14 est reliée à un potentiel de référence du dispositif de contrôle par le blindage du câble 12. Une première extrémité de la bobine 15 est reliée au potentiel de référence du dispositif de contrôle par le blindage du câble 13. Une seconde extrémité de la bobine 14 est reliée à une seconde extrémité de l'impédance 3 par le conducteur central du câble 12. Une seconde extrémité de la bobine 15 est reliée à une seconde extrémité de l'impédance 4 par l'intermédiaire du conducteur central du câble 13. Les secondes extrémités des impédances 3 et 4 constituent les sorties du pont de Wheastone et sont reliées respectivement à une entrée inversante et à une entrée non inversante de l'amplificateur différentiel 5. Accessoirement, la seconde extrémité de l'impédance 3 est reliée à une borne 23 d'entrée-sortie du générateur 1, dont le rôle sera décrit plus loin.

Un calcul montre que, pour un signal sinusoïdal, la tension de sortie du pont est une fonction de la différence des impédances complexes des bobines 14 et 15. Les impédances 3 et 4 sont constituées chacune d'une résistance pure et d'une inductance en parallèle, dont les valeurs sont choisies de telle sorte que le pont de Wheastone a un maximum de sensibilité.

Une entrée de l'amplificateur de puissance 2 est reliée à une borne de sortie 22 du générateur 1, qui fournit un signal carré. Une sortie de l'amplificateur différentiel 5 est reliée à une première entrée du multiplieur 6 et à une première entrée du multiplieur 7. Une seconde entrée du multiplieur 6 est reliée à une borne de sortie 21 du générateur 1, qui fournit un premier signal de référence, de forme carrée, de même fréquence que le signal carré fourni par la borne de sortie 22 pour l'excitation.

La seconde entrée du multiplieur 7 est reliée à une borne de sortie 24 du générateur 1 qui fournit un second signal de référence déphasé de 90° par rapport au premier signal de référence. Les sorties des multiplieurs 6 et 7 sont reliées respectivement aux entrées d'un filtre passe-bas 8 et d'un filtre passe-bas 9. Les sorties des filtres 8 et 9 sont reliées respectivement à deux bornes de sortie 10 et 11 du dispositif de contrôle, fournissant respectivement deux signaux représentant respectivement la partie réelle et la partie imaginaire de la différence des impédances complexes des bobines 14 et 15. Ces signaux peuvent être enregistrés par un enregistreur graphique ou peuvent être traités par un calculateur numérique, par exemple.

Le pont de Wheatstone ainsi constitué est alimenté par des signaux carrés et sa sortie fournit donc un signal constitué de signaux carrés, éventuellement distordus si la longueur des câbles 12 et 13 est grande. Le signal de sortie du pont de Wheatstone est amplifié par l'amplificateur différentiel 5 puis est traité indépendamment par les deux détecteurs synchrones 6,8 et 7,9. Chacun des détecteurs synchrones a la propriété bien connue de ne détecter que le signal ayant une fréquence et une phase identique à celle du signal de référence appliqué à ce détecteur synchrone. Par conséquent, chaque détecteur synchrone élimine non seulement des signaux parasites induits dans la sonde 18, mais aussi les harmoniques résultant de la forme impulsionnelle du signal d'excitation. Les filtres passe-bas 8 et 9 ne laissent passer que les très basses fréquences, correspondant aux variations de composition de la pièce 17 quand sa surface est balayée par la sonde 18.

Dans un dispositif de contrôle de type classique, si les câbles reliant la sonde au dispositif de contrôle ont une grande longueur, ils provoquent une réduction de sensibilité d'une part, à cause de la perte d'une grande partie de la puissance d'excitation dans les câbles, et d'autre part à cause d'un mauvais fonctionnement des détecteurs synchrones, parce que les signaux de référence n'ont plus une phase convenable par rapport au signal de sortie du pont de Wheatstone. En effet, le signal d'excitation et le signal à mesurer sont retardés par la longueur des câbles 12 et 13.

Pour remédier au problème des pertes, une solution consiste à déporter : les impédances 3, 4, l'amplificateur de puissance 2, et l'amplificateur différentiel 5; le plus près possible de la sonde 18. Le générateur 1, les détecteurs synchrones 6, 8 et 7, 9, et les dispositifs d'alimentations restent à distance.

Pour remédier au problème du déphasage, le générateur 1 comporte des moyens pour mesurer le temps de propagation d'un signal dans les câbles 12 et 13, pour aller du générateur 1 vers les bobines 14, 15, et pour revenir. Ces moyens fournissent une impulsion sur la borne 23, cette impulsion se propage dans le câble 12 puis revient à la borne 23. Ces moyens mesurent la durée de l'aller-retour et en déduisent un retard à appliquer à chacun des signaux de référence afin que les deux détecteurs synchrones fonctionnent de manière optimale.

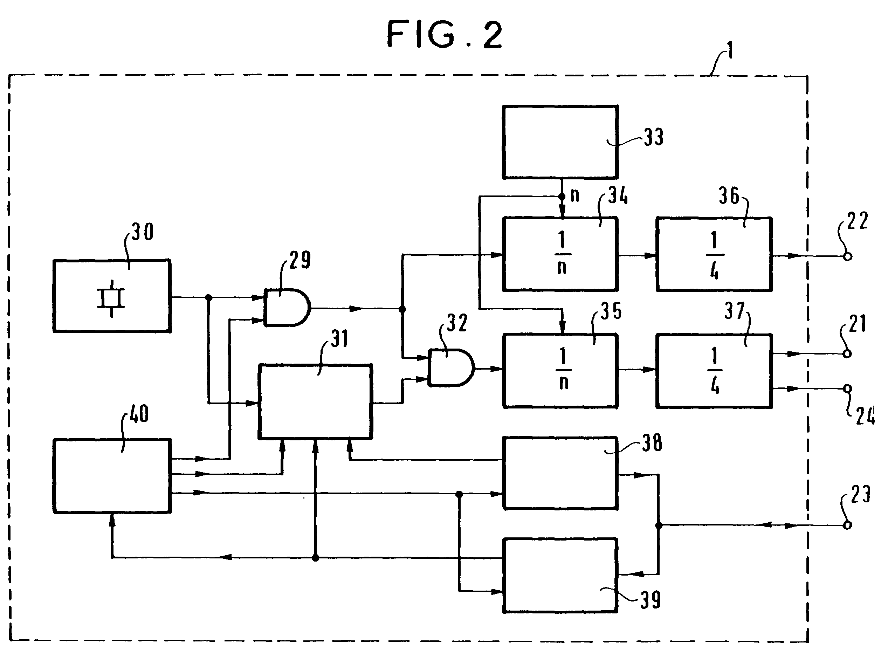

La figure 2 représente un schéma synoptique plus détaillée du générateur de cet exemple de réalisation. Il comporte : un oscillateur 30 stabilisé par un quartz, et délivrant un signal impulsionnel, de fréquence 128 MHz; un compteur-décompteur 31 appelé compteur de retard; deux portes logique ET, 29 et 32; un dispositif 33 de commande de fréquence; deux diviseurs de fréquence, programmables, 34 et 35; deux diviseurs de fréquence par quatre, 36 et 37; un dispositif 38 d'émission d'une impulsion; un dispositif 39 de réception d'une impulsion; et un dispositif 40 de commande d'initialisation.

La sortie de l'oscillateur 30 est reliée à une première entrée de la porte ET 29 et à une entrée d'horloge du compteur de retard 31, Une seconde entrée de la porte 29 est reliée à une première sortie du dispositif 40. Une sortie de la porte 29 est reliée à une première entrée de la porte 32 et à une entrée d'horloge du diviseur 34. Une seconde entrée de la porte 32 est reliée à une sortie du compteur 31. Une sortie de la porte 32 est reliée à une entrée d'horloge du diviseur 35. Une deuxième sortie du dispositif 40 est reliée à une entrée de validation du dispositif 38 et à une entrée de validation du dispositif 39. Le dispositif 38 possède une première sortie reliée à une entrée de validation de comptage du compteur 31 et une seconde sortie reliée à la borne d'entrée-sortie 23. Le dispositif 39 possède une sortie reliée à une entrée du dispositif 40 et à une entrée d'inhibition de comptage du compteur 31, et possède une entrée reliée à la borne d'entrée-sortie 23. Une troisième sortie du dispositif 40 est reliée à une entrée de sélection de comptage-décomptage du compteur 31.

La fréquence du signal fourni par l'oscillateur 30 est divisée par deux chaînes de diviseurs de fréquence, l'une constituée par les diviseurs 34 et 36, et l'autre constituée par les diviseurs 35 et 37.

La première chaîne fournit à la borne 22 le signal carré utilisé pour exciter la sonde 18, après avoir été amplifié. La seconde chaîne fournie, à la borne de sortie 21, le premier signal de référence, constitué d'un signal carré de même fréquence que le signal d'excitation mais déphasé d'un retard qui est fonction de la longueur des câbles 12 et 13. Elle fournit aussi à la borne de sortie 24 le second signal de référence, constitué d'un signal carré de même fréquence que le signal d'excitation, mais ayant un déphasage supplémentaire de 90° par rapport au premier signal de référence.

Les diviseurs 34 et 35 possèdent chacun une entrée de commande recevant un mot binaire fixant le rapport n de la division de fréquence qu'ils réalisent. Ce mot binaire est fourni par une sortie du dispositif 33. Ce dernier peut être un dispositif de commande manuelle ou un calculateur numérique commandant automatiquement l'ensemble du dispositif de contrôle.

Les diviseurs programmables 34 et 35 sont de réalisation classique et peuvent être constitués d'une cascade de circuits intégrés disponibles dans le commerce et programmables chacun par un mot binaire de 4 bits. Les diviseurs 36 et 37 réalisent tous les deux une division dans un rapport fixe égal à 4, mais ils sont agencés de manière à fournir trois signaux différents aux bornes de sortie 21, 22, 24. Ces trois signaux ont la même fréquence, qui est $\frac{1}{4n}$ fois plus faible que la fréquence de l'oscillateur 30.

Le diviseur 37 possède deux sorties reliées aux bornes de sortie 21 et 24, et leur fournissant respectivement deux signaux carrés déphasés de 90°. Le diviseur 36 ne possède qu'une sortie, reliée à la borne de sortie 22, et qui est en phase avec le signal fourni par le diviseur 37 à la borne 21, à condition que les diviseurs 34 et 35 reçoivent respectivement deux signaux d'horloge rigoureusement identiques.

Le diviseur 34 a une entrée d'horloge reliée directement à la sortie de la porte ET 29, alors que le diviseur 35 a une entrée d'horloge qui est reliée à cette même sortie par l'intermédiaire de la porte ET 32. La porte 32 est commandée par une sortie du compteur de retard 31, de telle sorte que le signal d'horloge du diviseur 35 est retardé d'un certain nombre de périodes, par rapport au signal d'horloge appliqué à l'entrée du diviseur 34.

Pendant une phase de préparation du générateur 1, préalable à un contrôle d'une pièce, le compteur de retard 31 est préchargé avec une valeur correspondant au retard à appliquer aux deux signaux de référence fournis respectivement par les bornes de sortie 21, 24, par rapport au signal fourni par la borne de sortie 22.

Le dispositif 40 commande les étapes de la phase de préparation du générateur 1. Par exemple, le dispositif 40 est un séquenceur lancé en actionnant manuellement un interrupteur. Le dispositif 40 commence par initialiser le compteur 31 et les diviseurs 34 à 37 en les remettant à zéro. Puis il sélectionne la fonction comptage dans le compteur 31. Puis il valide le dispositif 38 pour émettre une impulsion sur le câble 12, et le dispositif 39 pour recevoir une impulsion en retour. Le dispositif 38 commande le compteur 31 pour commencer le comptage à l'instant où il envoie une impulsion à la borne 23.

Lors de la réception de l'impulsion de retour, le dispositif 39 envoie un signal au compteur 31 pour arrêter le comptage à une valeur qui correspond à la durée d'aller-retour de l'impulsion. Le compteur 31 reste préchargé à cette valeur. Le dispositif 40 reçoit aussi le signal du dispositif 39 et il commande ensuite le compteur 31 pour sélectionner la fonction décomptage. Puis il valide la porte 29 pour qu'elle permette le fonctionnement des deux chaînes de diviseurs de fréquence. Les diviseurs 34 et 36 commencent à travailler immédiatement. Le compteur 31 décompte la valeur préchargée et valide la porte 32 lorsqu'il a décompté jusqu'à 0. Les diviseurs 35 et 37 se mettent alors à travailler avec un retard correspondant à la durée d'aller-retour d'une impulsion dans les câbles. Lorsqu'il a décompté jusqu'à 0, le compteur 31 s'arrête. La porte 32 reste ouverte. Le dispositif de contrôle est prêt pour des contrôles.

La portée de l'invention n'est pas limitée à l'exemple de réalisation décrit ci-dessus. Il est notamment à la portée de l'homme de l'art de réaliser un dispositif de contrôle comportant une seule bobine et un seul détecteur synchrone. Dans ce cas, l'utilisation d'un générateur stabilisé par un quartz, en combinaison avec au moins un diviseur de fréquence programmable, procure les mêmes avantages que dans le cas d'un dispositif de contrôle à deux bobines et à deux détecteurs synchrones. Le signal d'excitation est de préférence un signal carré, car c'est la forme de signal la plus simple à produire et à utiliser au moyens de circuits logiques classiques, mais le dispositif selon l'invention peut fonctionner aussi avec des signaux impulsionnels de rapport cyclique différent de $\frac{1}{2}$, voire de signaux périodiques de forme quelconque.

## Revendications

1. Dispositif de contrôle non destructif à courants de Foucault, comportant :

   - des moyens (1, 2) pour fournir un signal périodique d'excitation de puissance;
   - au moins une bobine (14, 15) reliée par un câble (12, 13) à une sortie des moyens (1, 2) pour fournir le signal périodique d'excitation de puissance, et couplée électromagnétiquement à une pièce à contrôler (17);
   - des moyens de mesure (3 à 9) pour détecter une variation de l'impédance d'une bobine (14, 15);

   caractérisé en ce que les moyens (1, 2) pour fournir un signal périodique d'excitation de puissance comportent :

   - un oscillateur (30) stabilisé par un quartz, fournissant un signal impulsionnel constituant un signal d'horloge, à fréquence constante;
   - au moins un diviseur de fréquence programmable (34 à 37) pour fournir un signal périodique ayant une fréquence variable sous-multiple de celle du signal de d'horloge.

2. Dispositif de contrôle selon la revendication 1, caractérisé en ce que le signal périodique d'excitation de puissance est un signal impulsionnel périodique, de rapport cyclique $\frac{1}{2}$; et en ce que les moyens de mesure comportent des moyens (6 à 9) pour filtrer la fréquence fondamentale du signal périodique d'excitation de puissance.

3. Dispositif de contrôle, selon la revendication 1, dans lequel les moyens de mesure (3 à 9) comportent au moins un détecteur synchrone (6 à 9) et dans lequel les moyens pour fournir un signal périodique d'excitation de puissance comportent des moyens (30, 35, 37) pour fournir à chaque détecteur synchrone un signal de référence;

   caractérisé en ce que pour compenser l'effet de la longueur du câble (12, 13), les moyens (30, 35, 37) pour fournir un signal de référence comportent en outre :

   - des moyens (31, 38 à 40) pour mesurer le temps de propagation d'un signal allant des moyens (30, 35, 37) pour fournir un signal de référence, jusqu'à une bobine (14, 15), et revenant;
   - des moyens (31) pour appliquer à chaque signal de référence un retard égal au temps de propagation ainsi mesuré.

## Patentansprüche

1. Zerstörungsfreie Prüfvorrichtung mit Foucault-Strömen, die aufweist:

   - Mittel (1, 2), um ein periodisches Leistungssignal zur Anregung zu liefern,
   - mindestens eine Spule (14, 15), die über ein Kabel (12, 13) an den Ausgang der Mittel (1, 2) zur Lieferung eines periodischen Leistungssignals angeschlossen ist und elektromagnetisch mit einem zu prüfenden Bauteil (17) gekoppelt ist,
   - Meßmittel (3 bis 9), um eine Veränderung der Impedanz einer Spule (14, 15) zu erfassen,

   dadurch gekennzeichnet, daß die Mittel (1, 2), um ein periodisches Leistungssignal zur Anregung zu liefern,

   - einen quarzstabilisierten Oszillator (30), der ein ein Taktsignal bildendes impulsförmiges Signal mit konstanter Frequenz liefert,
   - und mindestens einen programmierbaren Frequenzteiler (34 bis 37) enthalten, der ein periodisches Signal mit einer variablen Frequenz liefert, die ein Untervielfaches der Frequenz des Taktsignals ist.

2. Prüfvorrichtung nach Anspruch 1, dadurch gekennzeichnet, daß das periodische Leistungssignal zur Anregung ein periodisches impulsförmiges Signal mit einem zyklischen Schaltverhältnis von 1:2 ist und daß die Meßmittel Mittel (6 bis 9) zum Ausfiltern der Grundfrequenz des periodischen Leistungssignals zur Anregung enthalten.

3. Prüfvorrichtung nach Anspruch 1, in der die Meßmittel (3 bis 9) mindestens einen synchronen Detektor (6 bis 9) enthalten und in der die Mittel zur Lieferung eines periodischen Leistungssignals zur Anregung Mittel (30, 35, 37) enthalten, die an jeden Synchrondetektor ein Bezugssignal liefern, dadurch gekennzeichnet, daß zur Kompensation der Wirkung der Länge des Kabels (12, 13) die Mittel (30, 35, 37) zur Lieferung eines Bezugssignals außerdem aufweisen:

- Mittel (31, 38 bis 40) zur Messung der Signallaufzeit von den Mitteln (30, 35, 37) zur Lieferung eines Bezugssignals bis zu einer Spule (14, 15) und zurück,
- und Mittel (31), um jedes Bezugssignal um die so gemessene Signallaufzeit zu verzögern.

## Claims

1. Testing apparatus for non-destructive testing using eddy currents, the apparatus comprising:

  means (1, 2) for supplying a periodic power excitation signal;
  at least one coil (14, 15) connected via a cable (12, 13) to an output of the means (1, 2) for supplying the periodic power excitation signal, and coupled electromagnetically to a testpiece (17); and
  measurement means (3 to 9) for detecting any variation in the impedance of a coil (14, 15);
  said apparatus being characterized in that the means (1, 2) for supplying a periodic power excitation signal comprise:
  an oscillator (30) stabilized by a quartz crystal, and supplying a pulse signal constituting a clock signal at a constant frequency; and
  at least one programmable frequency divider (34 to 37) for supplying a periodic signal having a variable frequency that is a sub-multiple of that of the clock signal.

2. Testing apparatus according to claim 1, characterized in that the periodic power excitation signal is a periodic pulse signal having a duty ratio of 1/2, and in that the measurement means include means (6 to 9) for filtering the fundamental frequency of the periodic power excitation signal.

3. Testing apparatus according to claim 1, in which the measurement means (3 to 9) include at least one synchronous detector (6 to 9), and in which the means for supplying a periodic power excitation signal include means (30, 35, 37) for supplying a reference signal to each synchronous detector;

  said testing apparatus being characterized in that, in order to compensate the effect of the length of the cable (12, 13), the means (30, 35, 37) for supplying a reference signal further include:
  means (31, 38 to 40) for measuring the propagation time taken by a signal to go from the means (30, 35, 37) for supplying a reference signal to a coil (14, 15) and back again; and
  means (31) for applying a delay equal to the propagation time measured in this way to each reference signal.

# FIG.1

FIG. 2